# EUROPEAN PATENT APPLICATION

(11) **EP 4 588 531 A1**
(43) Date of publication of application: **23.07.2025**
(21) Application number: 24220145.7
(22) Date of filing: 16.12.2024
(51) Int. Cl.: A62C 3/16, A62C 3/07

(54) **BATTERY PACK FIRE EXTINGUISHING SYSTEM**

(30) Priority: 19.01.2024 KR 20240008739
(71) Applicant: SAMSUNG SDI CO., LTD., Yongin-si, Gyeonggi-do 17084 (KR)
(72) Inventor: KIM, Myoung Kon, 17084 Yongin-si (KR); HWANG, Tae Sin, 17084 Yongin-si (KR); KANG, Deok Jo, 17084 Yongin-si (KR)
(74) Representative: Marks & Clerk LLP

(57) **Abstract**

A battery pack fire-extinguishing system for battery cells includes a fire-extinguishing conduit defining a spray hole for spraying a fire-extinguishing agent to a vent hole in one of the battery cells, and a heat-sensitive member blocking the spray hole, and including a body portion at least partially surrounding a periphery of the fire-extinguishing conduit, and a nozzle portion corresponding to the spray hole, and having a thickness that is less than a thickness of the body portion.

## Description

### BACKGROUND

### 1. Field

Aspects of embodiments of the present disclosure relate to a battery pack fire-extinguishing system.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to an aspect of one or more embodiments of the present disclosure, there is provided a battery pack fire-extinguishing system that is configured to, even upon occurrence of a low-temperature event in a battery cell in a battery pack, spray a fire-extinguishing agent to the corresponding battery cell, thereby lowering the temperature of the corresponding battery cell and the temperature of a nearby battery cell to reduce or prevent the likelihood of propagation of heat to another battery cell adjacent to the corresponding battery cell.

These and other aspects and features of the present disclosure will be described in or will be apparent from the following description of embodiments of the present disclosure.

A battery pack fire-extinguishing system for battery cells according to one or more embodiments of the present disclosure includes a fire-extinguishing conduit defining a spray hole for spraying a fire-extinguishing agent to a vent hole in one of the battery cells, and a heat-sensitive member blocking the spray hole, and including a body portion at least partially surrounding a periphery of the fire-extinguishing conduit, and a nozzle portion corresponding to the spray hole, and having a thickness that is less than a thickness of the body portion.

The nozzle portion may include a recessed portion in the body portion and concave toward the spray hole, and a thin film portion on a bottom of the recessed portion, and having a thickness that is less than the thickness of the body portion.

The nozzle portion may further include an expanded recessed portion outside the recessed portion, having a diameter that is larger than a diameter of the recessed portion, having a thickness that is less than the thickness of the body portion, and having a thickness that is greater than the thickness of the thin film portion.

A diameter of the recessed portion may be smaller than a diameter of the spray hole.

A diameter of the spray hole may be about 6% to about 30% of a cross-sectional arc length of the fire-extinguishing conduit.

The recessed portion may include an inner wall having a thickness that is greater than the thickness of the thin film portion.

The recessed portion may include an inner wall having a thickness of about 1.5 times to about 3 times the thickness of the thin film portion.

The recessed portion may include an inner wall having a thickness of about 0.15 mm to about 1.5 mm.

The thickness of the thin film portion may be about 0.1 mm to about 0.5 mm.

A diameter of the spray hole may correspond to an angle about a center of the fire-extinguishing conduit of about 30° to about 90°.

The recessed portion may include an inner wall having a height of about 0.5 mm to about 3 mm.

The thin film portion may be configured to be melted at a temperature of about 150 °C to about 500 °C.

The thin film portion may be configured to be melted by a vent gas discharged from the vent hole in the one of the battery cells.

The fire-extinguishing system may further include a temperature sensor configured to detect a temperature of the one of the battery cells, a smoke sensor configured to detect an amount of smoke from the one of the battery cells, a controller configured to receive temperature information about the one of the the battery cells from the temperature sensor, or smoke information about the one of the battery cells from the smoke sensor, and a valve between the fire-extinguishing conduit and a fire-extinguishing agent spray container, and configured to be opened or closed in response to a control signal from the controller, the controller being configured to open the valve upon determining that the temperature exceeds a reference value or that the amount of smoke exceeds a reference value.

The fire-extinguishing conduit may include aluminum, copper, or stainless steel, wherein the heat-sensitive member includes acrylonitrile butadiene styrene (ABS), polypropylene (PP), polycarbonate (PC), polyethylene (PE), or perfluoro alkoxy alkene (PFA).

At least some of the above and other features of the invention are set out in the claims. However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIGS. 1A and 1B show a perspective view and a cross-sectional view, respectively, of a battery cell;
FIG. 2 shows a perspective view showing a battery module;
FIGS. 3A and 3B show perspective views showing a battery pack;
FIGS. 4A and 4B show perspective and side views illustrating a vehicle body and body part;
FIGS. 5A to 5D show a schematic diagram illustrating a charging method for a secondary battery;
FIG. 6 is a schematic diagram showing a direct-spray battery pack fire-extinguishing system according to the present disclosure;
FIG. 7 is a side view showing the direct-spray battery pack fire-extinguishing system according to the present disclosure;
FIGS. 8A and 8B are diagrams showing the operation of the direct-spray battery pack fire-extinguishing system according to the present disclosure;
FIGS. 9A, 9B, and 9C are, respectively, a plan view and cross-sectional views showing a fire-extinguishing conduit and a heat-sensitive member in the direct-spray battery pack fire-extinguishing system according to the present disclosure; and
FIG. 10 is a block diagram showing the electrical configuration of the direct-spray battery pack fire-extinguishing system according to the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be located in contact with the upper (or lower) surface of the element, and another element may also be interposed between the element and the arbitrary element located on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. The battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery cell constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. On the basis of the monitored state information, the control device may perform a control function (e.g., temperature control, balancing control, charge/discharge control, etc.) and a protection function (e.g., over-discharge, overcharge, over-current protection, short circuit, fire-extinguishing function, etc.). The control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. To prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop

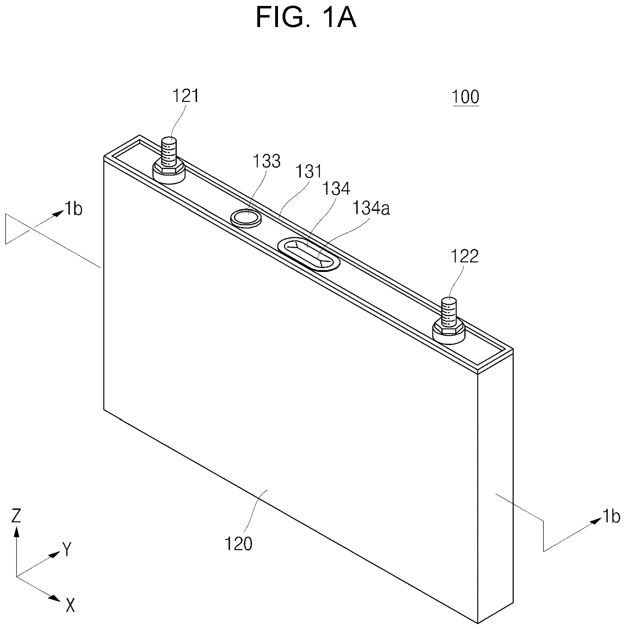

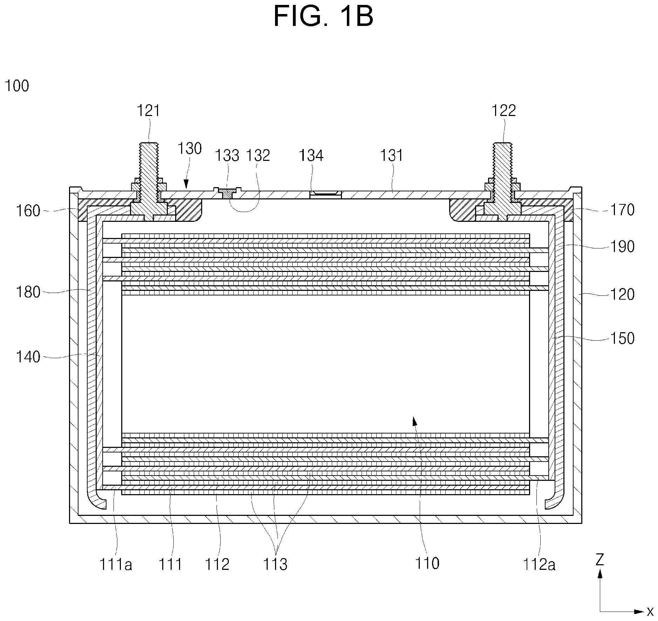

FIG. 1A is a perspective view illustrating a secondary battery according to one or more embodiments of the present disclosure, and FIG. 1B is a cross-sectional view taken along the line 1b-1b in FIG. 1A. Referring to FIGS. 1A and 1B, the secondary battery 100 according to one or more embodiments of the present disclosure may include at least one electrode assembly 110 wound with a separator 113 as an insulator between the positive electrode 111 and the negative electrode 112, a case 120 in which the electrode assembly 110 is received (or accommodated) therein, and a cap assembly 130 coupled to an opening of the case 120.

The secondary battery 100 according to one or more embodiments illustrated in FIGS. 1A and 1B will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode 111 and the negative electrode 112 may include a current collector made of a thin metal foil having a coated portion on which an active material is coated and an electrode uncoated portion 111a, 112a on which an active material is not coated.

The positive electrode 111 and the negative electrode 112 are wound after interposing the separator 113, which is an insulator, therebetween. However, the present disclosure is not limited thereto, and the electrode assembly 110 may have a structure in which a positive electrode 111 and a negative electrode 112, each made of a plurality of sheets, are alternately stacked with a separator interposed therebetween.

The case 120 may form the overall outer appearance of the secondary battery 100 and may be made of a conductive metal, such as aluminum, aluminum alloy, or nickel-plated steel. The case 120 may provide a space in which the electrode assembly 110 is accommodated.

The cap assembly 130 may include a cap plate 131 covering an opening in the case 120, and the case 120 and the cap plate 131 may be made of a conductive material. The positive and negative electrode terminals 121 and 122 electrically connected to the positive electrode 111 and the negative electrode 112, respectively, may be installed to penetrate (or extend through) the cap plate 131 and protrude outwardly therethrough.

Outer peripheral surfaces (e.g., circumferential surfaces) of upper pillars of the positive and negative electrode terminals 121 and 122 protruding outwardly from the cap plate 131 may be threaded and may be fixed to the cap plate 131 by utilizing nuts.

However, the present disclosure is not limited thereto, and the positive and negative electrode terminals 121 and 122 may have a rivet structure and may be riveted or welded to the cap plate 131.

The cap plate 131 may be made of a thin plate and may be coupled to the opening in the case 120, and an electrolyte injection port 132 into which a sealing stopper 133 may be installed may be located (e.g., formed) in the cap plate 131, and a vent portion 134 having a notch 134a may be installed. In one or more embodiments, the vent portion 134 may block the vent hole provided in the cap plate 131. In one or more embodiments, the vent portion 134 may be joined or welded to the surrounding area of the vent hole (the area of the cap plate).

The positive and negative electrode terminals 121 and 122 may be electrically connected to current collectors including first and second current collectors 140 and 150 (hereinafter referred to as positive and negative current collectors) by being bonded or coupled (e.g., by welding) to the positive uncoated portion 111a and the negative electrode uncoated portion 112a, respectively.

For example, the positive and negative electrode terminals 121 and 122 may be coupled by welding to the positive and negative electrode current collectors 140 and 150, respectively. However, the present disclosure is not limited thereto, and the positive and negative electrode terminals 121 and 122 and the positive and negative electrode current collectors 140 and 150 may be integrally formed in one or more embodiments.

An insulation member may be installed between the electrode assembly 110 and the cap plate 131. The insulation member may include first and second lower insulation members 160 and 170, and each of the first and second lower insulation members 160 and 170 may also have a portion located between the electrode assembly 110 and the case 120.

According to one or more embodiments of the present disclosure, one end of a separation member may face one side of the electrode assembly 110 and may be installed between the insulation member and the positive or negative electrode terminals 121 and 122.

In one or more embodiments, the separation member may include first and second separation members 180 and 190.

In such embodiments, first ends of the first and second separation members 180 and 190 installed to face one side of the electrode assembly 110 may be respectively installed between the first and second lower insulation members 160 and 170 and the positive and negative electrode terminals 121 and 122.

The positive and negative electrode terminals 121 and 122, which may be coupled by welding to the positive and negative electrode current collectors 140 and 150, may be coupled to first ends of the first and second lower insulation members 160 and 170 and the first and second separation members 180 and 190.

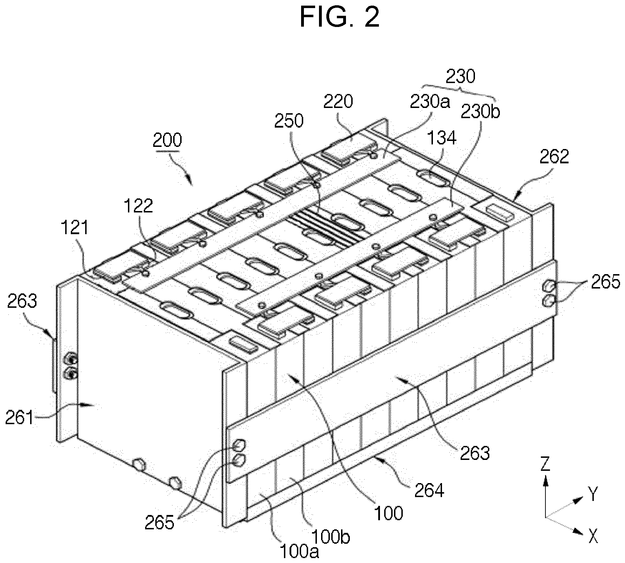

FIG. 2 is a perspective view illustrating a battery module according to one or more embodiments of the present disclosure. Referring to FIG. 2, the battery module 200 according to one or more embodiments of the present disclosure includes electrode units or electrode terminals 121 and 122, a plurality of battery cells 100 arranged in one direction, a connection tab 220 connecting a battery cell 100a to an adjacent battery cell 100b, and a protection circuit module 230 having one end connected to the connection tab 220. The protection circuit module 230 may include a battery management system (BMS). Further, the connection tab 220 may include a body portion in contact with the electrode units or electrode terminals 121 and 122 between the adjacent battery cells 100a and 100b and an extension portion extending from the body portion and connected to the protection circuit module 230. The connection tab 220 may be, for example, a bus bar.

Each battery cell 100 may include a battery case, an electrode assembly received (or accommodated) in the battery case, and an electrolyte. The electrode assembly and the electrolyte react electrochemically to store and release (e.g., generate) energy.

Terminal parts, e.g. electrode terminals 121 and 122, electrically connected to the connection tab 220 and a vent portion 134 as a discharge passage for gas generated inside the battery case may be provided on one side of (e.g., an upper side of) the battery cell 100.

The electrode terminals 121 and 122 of the battery cell 100 may be a positive electrode terminal 121 and a negative electrode terminal 122 having different polarities from each other, and the electrode terminals 121 and 122 of the adjacent battery cells 100a and 100b may be electrically connected to each other in series or parallel by the connection tab 220, to be described in more detail below. Although a serial connection has been described as an example, the connection structure is not limited thereto, and various connection structures may be employed as desired or necessary.

The number and arrangement of battery cells is not limited to the structure shown in FIG. 2 and may be changed as desired or necessary.

The plurality of battery cells 100 may be arranged in (e.g., may be stacked in) one direction so that the wide surfaces of the battery cells 100 face each other, and the plurality of battery cells 100 may be fixed by the housings 261, 262, 263, and 264. The housings 261, 262, 263, and 264 may include a pair of end plates 261 and 262 facing the wide surfaces of the battery cell 100 and a side plate 263 and a bottom plate 264 connecting the pair of end plates 261 and 262 to each other. The side plate 263 may support side surfaces of the battery cells 100, and the bottom plate 264 may support bottom surfaces of the battery cells 100. The pair of end plates 261 and 262, the side plate 263 and the bottom plate 264 may be connected by bolts 265 and/or any other suitable fastening members and methods known to those of ordinary skill in the art.

The protection circuit module 230 may have electronic components and protection circuits mounted thereon and may be electrically connected to connection tabs 220, to be described in more detail later.

The protection circuit module 230 includes a first protection circuit module 230a and a second protection circuit module 230b extending along the direction in which the plurality of battery cells 100 are arranged in different locations. The first protection circuit module 230a and the second protection circuit module 230b may be spaced from each other at a suitable interval (e.g., a predetermined interval) and arranged parallel to each other to be electrically connected to adjacent connection tabs 220, respectively. For example, the first protection circuit module 230a extends on one side of the upper portion of the plurality of battery cells 100 along the direction in which the plurality of battery cells 100 are arranged, and the second protection circuit module 230b extends to the other upper side of the plurality of battery cells 100 along the direction in which the plurality of battery cells 100 are arranged. The second protection circuit module 230b may be spaced from the first protection circuit module 230a at a suitable interval (e.g., a predetermined interval) with the vent portions 134 interposed therebetween but may be located parallel to the first protection circuit module 230a. As such, the two protection circuit modules are spaced from each other side-by-side along the direction in which the plurality of battery cells 100 are arranged, thereby reducing or minimizing the area of the printed circuit board (PCB) constituting the protection circuit module. By separately configuring the protection circuit module into two protection circuit modules, unnecessary PCM area can be reduced or minimized.

The first protection circuit module 230a and the second protection circuit module 230b may be connected to each other by a conductive connection member 250. One side of the conductive connection member 250 is connected to the first protection circuit module 230a, and the other side thereof is connected to the second protection circuit module 230b so that the two protection circuit modules 230a and 230b can be electrically connected with each other.

The connection may be performed by any one of soldering, resistance welding, laser welding, projection welding and/or any other suitable connection methods known to those of ordinary skill in the art.

The connection member 250 may be, for example, an electric wire. The connection member 250 may be made of a material having elasticity or flexibility. By the connection member 250, it may be possible to check and manage whether the voltage, temperature, and/or current of the plurality of battery cells 100 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 250.

If the battery cell 100 swells, shocks may be absorbed by the elasticity or flexibility of the connection member 250, thereby preventing the first and second protection circuit modules 230a and 230b from being damaged.

The shape and structure of the connection member 250 is not limited to the shape and structure shown in FIG..2.

As described above, because the protection circuit module 230 is provided as the first and second protection circuit modules 230a and 230b, the area of the PCB constituting the protection circuit module can be reduced or minimized, and the space inside the battery module can be secured, which improves work efficiency by facilitating a fastening work for connecting the connection tab 220 and the protection circuit module 230 and repair work if (or when) an abnormality is detected in the battery module.

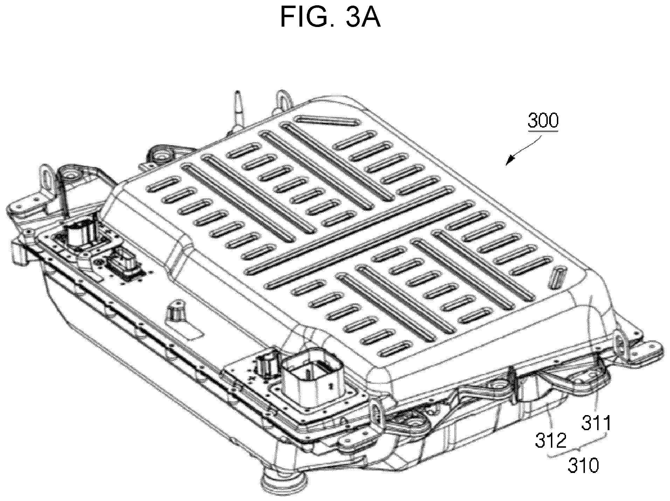

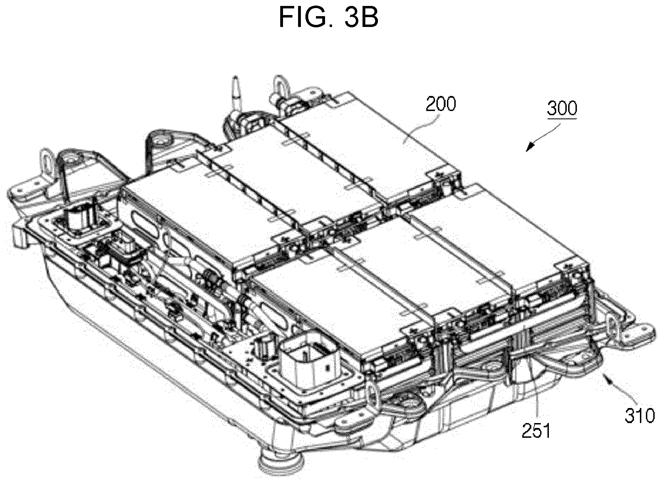

FIGS. 3A and 3B show a battery pack 300 according to one or more embodiments of the present disclosure. The battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output.

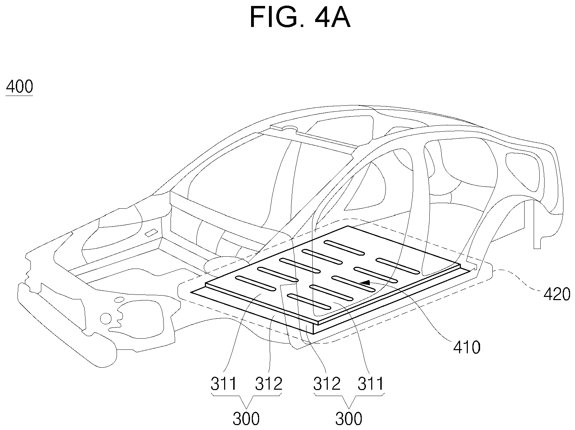

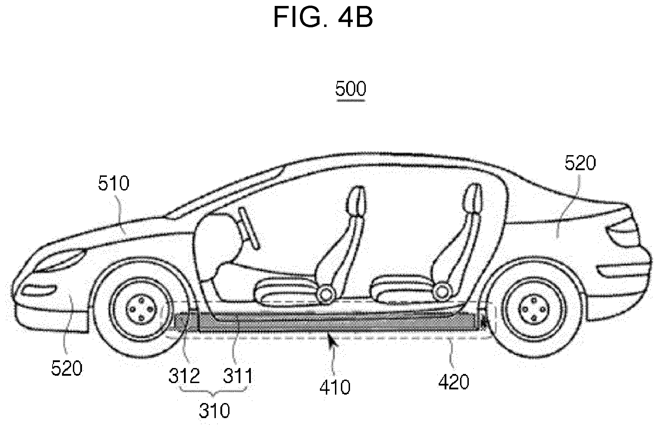

FIGS. 4A and 4B show a vehicle body part 400 and a vehicle 500 according to one or more embodiments of the present disclosure including the battery pack 300 shown in FIGS. 3A and 3B. As shown in FIG. 4A, a battery pack 300 may include a battery pack cover 311, which is a part of a vehicle underbody 410 and may correspond to the first housing, and a pack frame 312, which is located under the vehicle underbody 410 and may corresponding to the second housing. The battery pack cover 311 and the pack frame 312 may be integrally formed with a vehicle floor 420. The vehicle underbody 410 separates the inside and outside of a vehicle, and the pack frame 312 may be located outside the vehicle.

In FIG. 4B, a vehicle 500 may be formed by combining additional parts, such as a hood 510 in front of the vehicle 500 and fenders 520 respectively located in the front and rear of the vehicle 500 to a vehicle body part 400. The vehicle 500 may include the battery pack 300 including the battery pack cover 311 and the pack frame 312, and the battery pack 300 may be coupled to the vehicle body part 400.

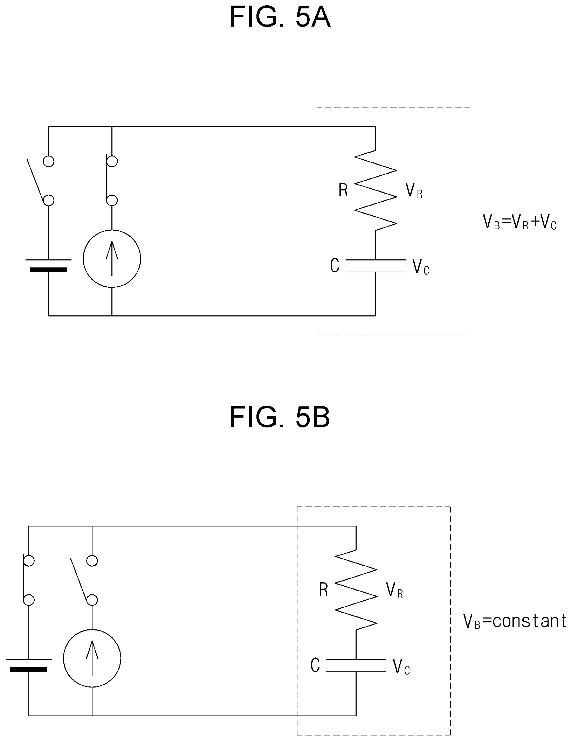

FIGS. 5A to 5B show a schematic diagram illustrating a charging method for a secondary battery. In one or more embodiments, the secondary battery may be charged and discharged, for example, in the following manner.

Constant current constant voltage (CCCV) charging is a charging method in which constant current (CC) charging is performed until the voltage reaches a suitable or reference voltage (e.g., a predetermined voltage), and then constant voltage (CV) charging is performed until the amount of current flowing decreases, for example, until the end current value.

During CC charging, as shown in FIG. 5A, a switch of a constant current power supply is turned on and a switch of a constant voltage power supply is turned off so that a constant current I flows through the secondary battery. During this period, because the current I is constant, a voltage V_{R} applied to an internal resistor R is also constant according to Ohm's law (V_{R}=R×I). A voltage Vc applied to a secondary battery capacitor C increases with time. A secondary battery voltage V_{B} may rise over time.

When (or if) the secondary battery voltage V_{B} reaches a suitable or reference voltage (e.g., a predetermined voltage), for example, about 4.3 V, CC charging is switched to CV charging. During CV charging, as shown in FIG. 5B, the switch of the constant voltage power supply is turned on and the switch of the constant current power supply is turned off so that the secondary battery voltage V_{B} is constant. The voltage Vc applied to the secondary battery capacitor C increases with time. Because V_{B} = V_{R} + V_{C} is satisfied, the voltage V_{R} applied to the internal resistor R decreases with time. As the voltage V_{R} applied to the internal resistor R decreases, the current I flowing through the secondary battery may also decrease according to Ohm's law (V_{R}=R×I).

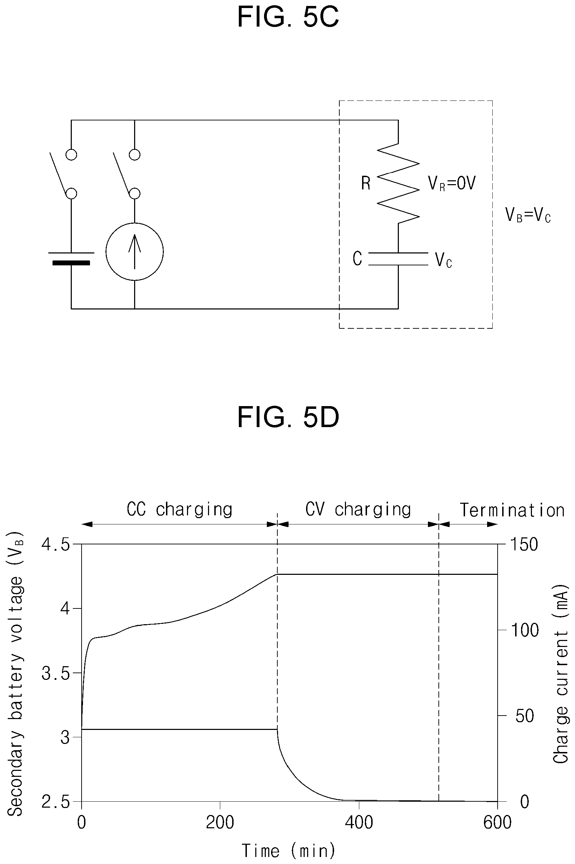

When (or if) the current I flowing through the secondary battery reaches a suitable or reference current (e.g., a predetermined current), for example, about 0.01 C, charging is terminated. When (or if) CCCV charging is finished, all switches are turned off and the current I becomes 0, as shown in FIG. 5C. At this time, the voltage V_{R} applied to the internal resistor R becomes 0 V. Even if voltage drop is prevented across the internal resistor R, the secondary battery voltage V_{B} does not substantively decrease.

FIG. 5D shows a graph of a secondary battery voltage V_{B} and charging current during CCCV charging and after CCCV charging is terminated. Even after CCCV charging is terminated, the secondary battery voltage V_{B} does not substantively decrease.

In one or more embodiments, a secondary battery may be used as a battery module constituted by a plurality of unit battery cells connected in series and/or in parallel to each other to provide high energy density. The battery module may be formed by interconnecting electrode terminals of a plurality of unit battery cells to realize a high-output secondary battery according to a suitable amount of power. The structure in which a plurality of battery modules is connected in series and/or in parallel to each other may be referred to as a battery pack.

The battery module may be constructed in a block design or a modular design. In the block design, each battery cell may be coupled to a common current-collecting structure and a common battery management system. In the modular design, a plurality of battery cells may be connected to each other to form a sub-module, and a plurality of sub-modules may be connected to each other to form a battery module. A battery management function may be implemented at a module level or a sub-module level to improve interchangeability of components. To realize a battery system, one or more battery modules may be mechanically and electrically integrated, may be equipped with a thermal management system, and may be set up for communication with one or more electricity consumers.

The mechanical integration of the battery modules may be achieved by providing a cooling plate, and by placing individual battery cells or sub-modules thereon. The fixing of the battery cells or the sub-modules may be achieved by means of depressed portions formed in the cooling plate or mechanical interconnects, such as bolts or screws. In one or more embodiments, the battery cells or the sub-modules may be restrained by fastening side plates to the side surfaces of the cooling plate.

To provide thermal control of the battery pack, a thermal management system may be suitable to safely use at least one battery module by effectively radiating, discharging, and/or dissipating heat generated from the secondary battery. If heat is not sufficiently radiated/discharged/dissipated, a temperature deviation may occur between the battery cells, so that at least one battery module may not generate a desired amount of power. Increase in internal temperature may cause an abnormal reaction to occur therein, potentially leading to deterioration in the charging/discharging performance of the secondary battery and/or shortening of the lifespan thereof. It is desirable to develop a cell cooling mechanism for effectively radiating, discharging, and/or dissipating heat generated in the cells.

Thermal runaway is an example of an abnormal operational state of a battery cell that may occur due to a strongly overheated or overcharged lithium ion battery cell. The critical temperature for transition to thermal runaway may be about 150 °C or higher, and heat may propagate from a battery cell having defective electrical contact or short circuit to another battery cell adjacent thereto. Thermal runaway may be a self-accelerating chemical reaction in a cell. Such thermal runaway may generate large amounts of heat and gas until all available materials are exhausted. During thermal runaway, a defective cell may be heated to a cell temperature of about 800 °C or higher, and may discharge a large amount of hot gas to the interior of the system. The battery cell may typically include a vent hole formed therein to discharge a vent gas if pressure in the battery cell exceeds a reference pressure. In a cell case having a high energy density (e.g., about 200 Wh/kg), a discharged vent gas may have a temperature of about 500 °C, and a gas velocity of about 300 m/s.

During thermal runaway, a large amount of heat may propagate to adjacent cells due to a vent gas. Because these cells have been heated by the faulty cell due to thermal conduction via side plates, base plates, and/or electrical connectors thereof, the cells are highly likely to undergo thermal runaway. This may result in thermal runaway propagation and battery fire over the entire battery system.

Generally, an energy storage system, which is installed in a container, an enclosure, a building, or a dedicated building, may include a fire-extinguishing system to extinguish a fire upon occurrence of a fire due to electric shock, short circuit, an external surge, or the like.

Recently, there has been employed a direct-spray fire-extinguishing system in which a fire-extinguishing conduit is opened if an event occurs in a certain battery cell, and in which opening of a vent portion of the battery cell is detected, so that a fire-extinguishing agent is directly sprayed to the inside/outside of the battery cell in which the event occurs. This direct-spray fire-extinguishing system may be suitable for the trend toward higher capacity battery cells.

In one or more embodiments, a direct-spray fire-extinguishing system may execute, upon occurrence of an event in a cell, a method of performing fire extinguishing in response to flame and/or smoke from the cell. In one or more embodiments, the flame emitted from a vent portion of the cell may melt a polymer resin blocking an agent spray nozzle of a fire-extinguishing conduit, and a temperature sensor or a smoke sensor may detect temperature or may detect the amount of smoke, and may transmit an opening signal to a fire-extinguishing agent supplier, whereby a fire-extinguishing agent may be directly sprayed to the cell in which the event occurs through the opened nozzle of the fire-extinguishing conduit.

In one or more embodiments, the fire-extinguishing conduit of the direct-spray fire-extinguishing system may be processed in such a way that a through-hole serving as a nozzle is formed in the fire-extinguishing conduit. The through-hole in the conduit may be blocked by a polymer material through a separate insert injection molding process. The polymer injection-molded part may block the through-hole to seal the conduit in a normal state. Upon occurrence of an event in a cell, the polymer injection-molded part may be melted by flame, and then the nozzle may be opened by pressure of the sprayed fire-extinguishing agent, so that the fire-extinguishing agent may reach the cell in which the event occurs. As such, upon occurrence of an event, the opening of the nozzle may depend on the temperature of the flame and/or may depend on a time of exposure to the flame.

Upon occurrence of an event in a beginning-of-life cell (e.g., cell having a state of charge of 100%), the temperature of flame directly emitted from the cell may be about 800 °C or higher, and there may be no problem in opening the nozzle located above the vent portion. Upon occurrence of an event in an end-of-life cell, or in a structure in which placement of the fire-extinguishing conduit directly above the vent portion is difficult or impossible, the temperature transferred to the nozzle (e.g., via a heat transfer medium) may be relatively low, and the heat transfer path may be relatively long. The polymer resin blocking the nozzle may not be melted, and the nozzle may not be opened at a suitable time, potentially leading to failure in fire extinguishing.

It may be desirable to develop a direct-spray fire-extinguishing system capable of stably opening a nozzle even at a temperature that is lower than about 800 °C. In the present disclosure, a temperature that is lower than about 800 °C may be defined as low temperature.

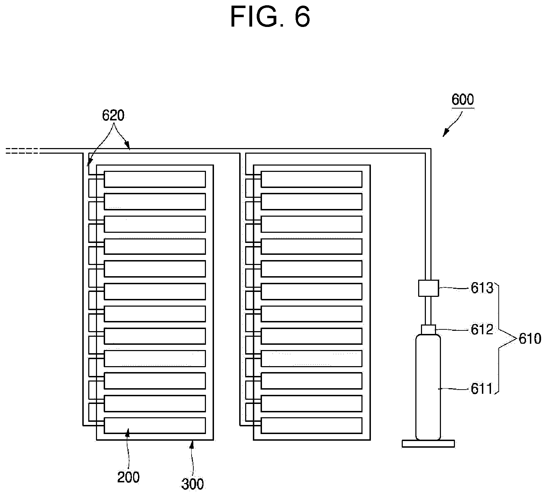

FIG. 6 is a schematic diagram showing a direct-spray battery pack fire-extinguishing system 600 according to the present disclosure. As shown in FIG. 6, in one or more embodiments, the direct-spray battery pack fire-extinguishing system 600 may include a fire-extinguishing agent supplier 610 configured to supply a fire-extinguishing agent to a battery pack 300 or a battery module 200, a fire-extinguishing conduit 620 configured to convey and spray the fire-extinguishing agent, and a sensor configured to detect a fire. In one or more embodiments, the battery pack 300 or the battery module 200 may include, or may be referred to as, an energy storage system.

In one or more embodiments, the fire-extinguishing agent supplier 610 may include a fire-extinguishing agent spray container 611 configured to store the fire-extinguishing agent, a discharge valve 612 for spraying the fire-extinguishing agent, a regulator 613 configured to regulate supply pressure and supply time of the fire-extinguishing agent, and a controller for control of the system.

The fire-extinguishing agent spray container 611 may be a pressure container for storing the fire-extinguishing agent. The fire-extinguishing agent spray container 611 may be classified into a self-supporting type or a support-structure-attached type, depending on whether the fire-extinguishing agent spray container 611 is capable of being installed independently. In one or more embodiments, the fire-extinguishing agent may include Novec^{™} 1230 (Novec^{™} being a registered trademark of 3M Company, Delaware, USA). A compressed gas for spray of the fire-extinguishing agent may include nitrogen.

If the controller determines spray of the fire-extinguishing agent, the discharge valve 612 may be opened so that the fire-extinguishing agent is sprayed. The discharge valve 612 may serve to open or close the fire-extinguishing agent spray container 611. If the discharge valve 612 is opened, the fire-extinguishing agent may be discharged and moved to the regulator 613. The regulator 613 may serve to regulate the spray pressure of the fire-extinguishing agent to a final spray pressure. To this end, the regulator 613 may include a pressure regulator.

The fire-extinguishing conduit 620 may include a main pipe, a branch pipe, and a spray pipe, which extend from the fire-extinguishing agent supplier 610 to each of a plurality of battery modules 200 of the battery pack 300. In one or more embodiments, the plurality of battery modules 200 may be mounted on a plurality of battery racks, and the branch pipe and the spray pipe for spray of the fire-extinguishing agent may be mounted to each of the battery racks.

If a fire occurs in the battery modules 200, the sensor may detect the occurrence of a fire, and the fire-extinguishing agent may be supplied from the fire-extinguishing agent supplier 610, and may be sprayed to the battery modules 200 through the fire-extinguishing conduit 620. The fire-extinguishing agent may be rapidly sprayed to the battery modules 200, thereby extinguishing the fire occurring in the battery modules 200.

Hereinafter, for convenience of description, the main pipe, the branch pipe, and the spray pipe will be collectively referred to as the fire-extinguishing conduit 620, and the fire-extinguishing conduit 620 and a heat-sensitive member 630 coupled thereto will be mainly described.

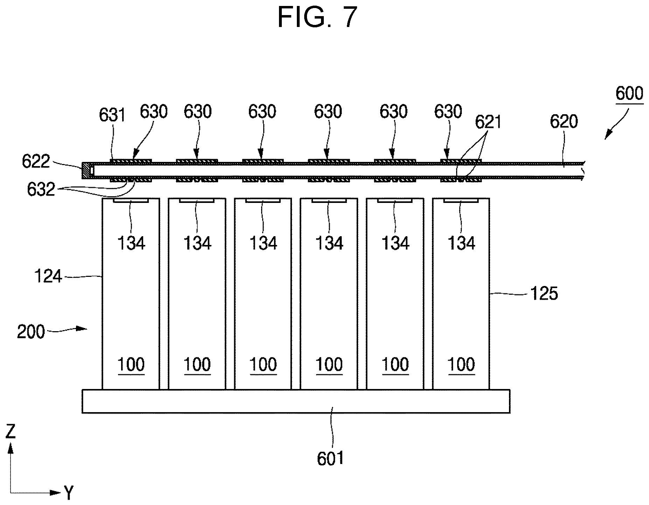

FIG. 7 is a side view showing the direct-spray battery pack fire-extinguishing system 600 according to the present disclosure. In the example shown in FIG. 7, the battery module 200 may include a plurality of battery cells 100 arranged in alignment with each other in a first direction (e.g., a Y-direction). In one or more embodiments, each of the battery cells 100 may be a prismatic (or rectangular) cell, and wide flat sidewalls 124 and 125 of the battery cells 100 may be stacked together to form the battery module 200. In one or more embodiments, the battery cells 100 may be arranged such that the sidewalls 124 and 125 of adjacent battery cells 100 face each other and/or are in close contact with each other. In one or more embodiments, spacers made of an organic material and/or an inorganic material to reduce or prevent heat propagation may be located between the sidewalls 124 and 125 of adjacent cells 100. Positive electrode terminals and negative electrode terminals of neighboring battery cells 100 may be respectively electrically connected to each other via bus bars, in one or more embodiments. The plurality of battery cells 100 may be electrically connected to each other as a bundle to use the battery module 200 as a power source. In some embodiments, a plurality of battery modules 200 may be electrically connected to each other to form the battery pack 300, and the battery pack 300 may be used as a power source.

As described above, each of the battery cells 100 may include a vent portion 134 located in a cap assembly 130 of the battery cell 100 at a distance from a positive electrode terminal 121 and a negative electrode terminal 122 (e.g., refer to FIGS. 1A and 1B). The vent portions 134 of the plurality of battery cells 100 arranged in the first direction may also be arranged in the first direction (the vent portions 134 are shown in FIG. 7 for understanding of the present disclosure). In some embodiments, the plurality of battery cells 100 may be located on a cooling plate 601 that is configured to support the weights of the battery cells 100, and that is configured to cool the battery cells 100.

The direct-spray fire-extinguishing system 600 may include the above-described fire-extinguishing conduit 620 and a plurality of heat-sensitive members 630. The fire-extinguishing conduit 620 may include spray holes 621 formed therein to spray the fire-extinguishing agent to the vent portions (or vent holes) 134 of the battery cells 100. In one or more embodiments, an end of the fire-extinguishing conduit 620 may be shielded by a plug 622. The heat-sensitive members 630 may be coupled to the fire-extinguishing conduit 620 while blocking the spray holes 621. In one or more embodiments, the number of spray holes 621 formed in the fire-extinguishing conduit 620 may correspond to the number of vent portions 134 formed in the battery cells 100. In one or more embodiments, at least one spray hole 621 (e.g., two spray holes 621) may correspond to each vent portion 134. In one or more embodiments, each of the heat-sensitive members 630 may include a body portion 631 surrounding the periphery of the fire-extinguishing conduit 620, and a nozzle portion 632 located in a region corresponding to the spray hole 621 and having a smaller thickness than the body portion 631.

A part of the nozzle portion 632 of the heat-sensitive member 630 corresponding to a battery cell 100 in which an event occurs may be melted, and the fire-extinguishing agent may be sprayed only to the battery cell 100 in which the event occurs. The temperature of the battery cell 100 in which the event occurs may be lowered, and heat may not propagate to another normal battery cell 100 adjacent to the battery cell 100 in which the event occurs. For example, a thermal runaway phenomenon may not propagate to another cell adjacent to the cell in which the event occurs.

In one or more embodiments, the battery modules 200 may be arranged at intervals in a second direction (e.g., an X-direction). The above-described fire-extinguishing conduits 620 and the above-described heat-sensitive members 630 may also be arranged at intervals in the second direction above the battery modules 200. In one or more embodiments, the plurality of battery modules 200 may be referred to as the battery pack 300.

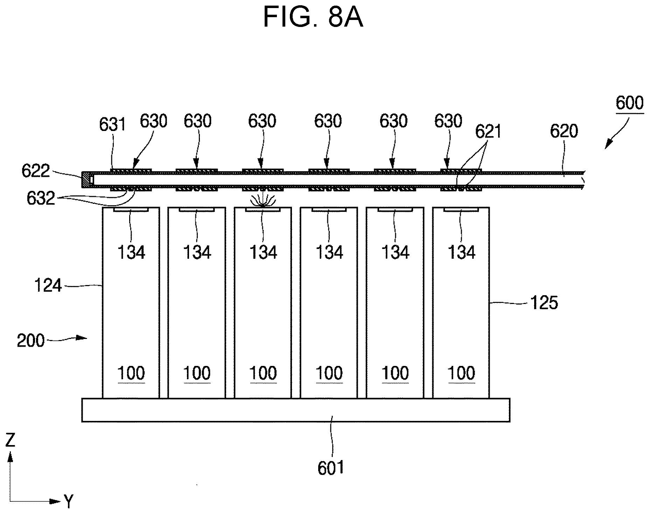

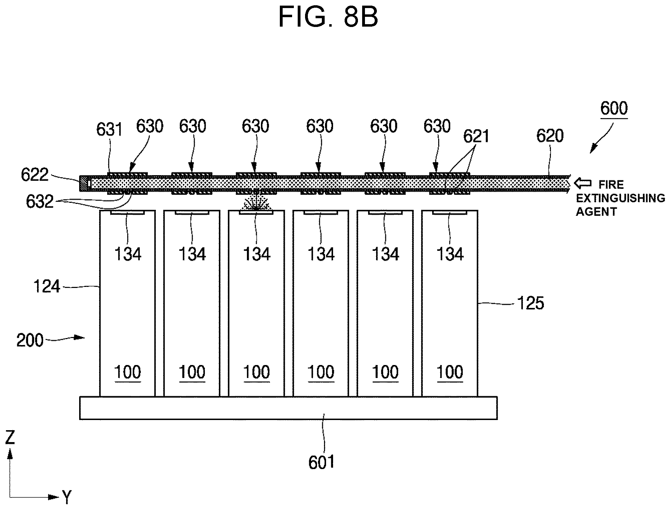

FIGS. 8A and 8B are diagrams showing the operation of the direct-spray battery pack fire-extinguishing system 600 according to the present disclosure. As shown in FIG. 8A (e.g., refer to the third cell from the left in FIG. 8A), a vent gas may be discharged through the vent portion 134 of a certain battery cell 100 (e.g., an event may occur). Upon determining that the detected temperature of the battery cell 100 exceeds a reference value, or that the detected amount of smoke from the battery cell 100 exceeds a reference value, the controller may open the valve 612. The fire-extinguishing agent may be supplied from the container 611 to the fire-extinguishing conduit 620. As shown in FIG. 8B, a part of the heat-sensitive member 630 corresponding to the vent gas may be melted by the vent gas or surrounding heat, so that the fire-extinguishing agent in the fire-extinguishing conduit 620 may be directly sprayed to the vent portion 134 of the battery cell 100.

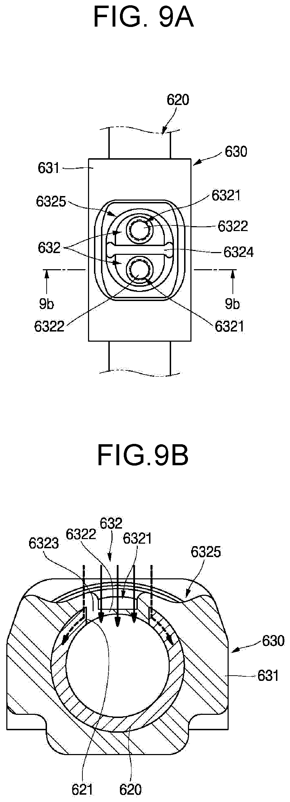

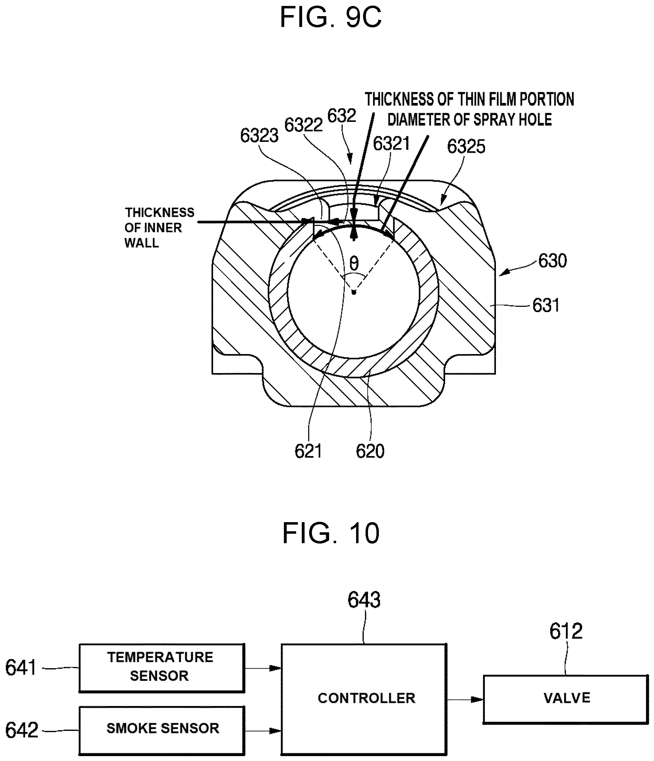

FIGS. 9A, 9B, and 9C are, respectively, a plan view and cross-sectional views showing the fire-extinguishing conduit 620 and the heat-sensitive member 630 in the direct-spray battery pack fire-extinguishing system 600 according to the present disclosure. For convenience of description, the fire-extinguishing conduit 620 and the heat-sensitive member 630 are shown in an inverted state. As shown in FIGS. 9A and 9B, the direct-spray fire-extinguishing system 600 may include the fire-extinguishing conduit 620 and the heat-sensitive member 630. In one or more embodiments, the fire-extinguishing conduit 620 may include a conductive material, such as aluminum, copper, or stainless steel, and the heat-sensitive member 630 may include a polymer, such as acrylonitrile butadiene styrene (ABS), polypropylene (PP), polycarbonate (PC), polyethylene (PE), or perfluoro alkoxy alkene (PFA).

In one or more embodiments, two spray holes 621 may be formed in a portion of the fire-extinguishing conduit 620 corresponding to one heat-sensitive member 630. In one or more embodiments, the heat-sensitive member 630 may include a body portion 631 surrounding the periphery of the fire-extinguishing conduit 620, and also may include a nozzle portion 632 located in a region corresponding to the spray holes 621 and having a smaller thickness than the body portion 631. In one or more embodiments, the nozzle portion 632 may include two recessed portions 6321 formed in the body portion 631 so as to be concave toward the two spray holes 621, and also may include two thin film portions 6322 respectively formed on the bottom of the two recessed portions 6321 and having a smaller thickness than the body portion 631. One rib 6324, which has a relatively large thickness, may be formed between the two recessed portions 6321. The rib 6324 may serve to reduce or prevent the likelihood of a region between the two thin film portions 6322 being melted before the two thin film portions 6322 are melted.

In one or more embodiments, the nozzle portion 632 may further include an expanded recessed portion 6325, which is formed outside the recessed portions 6321, which has a larger diameter than the recessed portions 6321, which has a smaller thickness than the body portion 631, and which has a larger thickness than the thin film portions 6322. For example, the two recessed portions 6321 may be located inside one expanded recessed portion 6325.

In one or more embodiments, the diameter of the recessed portion 6321 may be smaller than the diameter of the spray hole 621. In one or more embodiments, the diameter of the spray hole 621 may be about 6% to about 30% of the entire cross-sectional arc length of the fire-extinguishing conduit 620. The diameter of the recessed portion 6321 may also be about 6% to about 30% of the entire cross-sectional arc length of the fire-extinguishing conduit 620. If the diameter of the spray hole 621 is smaller than about 6% of the entire cross-sectional arc length of the fire-extinguishing conduit 620, the heat transfer efficiency by the vent gas may be reduced, and the thin film portion 6322 may not be melted at a desired time. If the diameter of the spray hole 621 is larger than about 30% of the entire cross-sectional arc length of the fire-extinguishing conduit 620, the durability of the thin film portion 6322 may be reduced, and the thin film portion 6322 may be damaged by external impact.

In one or more embodiments, the thickness of an inner wall 6323 of the recessed portion 6321 may be greater than the thickness of the thin film portion 6322. In one or more embodiments, the thickness of the inner wall 6323 of the recessed portion 6321 may be about 1.5 times to about 3 times the thickness of the thin film portion 6322. In one or more embodiments, the thickness of the inner wall 6323 of the recessed portion 6321 may be about 0.15 mm to about 1.5 mm. The heat-sensitive members 630 may be formed on the fire-extinguishing conduit 620 through a double injection molding process. It may be difficult to make the thickness of the inner wall 6323 of the recessed portion 6321 that is less than about 0.15 mm due to a design tolerance of an injection mold. If the thickness of the inner wall 6323 of the recessed portion 6321 is greater than about 1.5 mm, the area of the thin film portion 6322 may be reduced, and an efficiency of the spraying of the fire-extinguishing agent may deteriorate.

In one or more embodiments, the thickness of the thin film portion 6322 may be about 0.1 mm to about 0.5 mm. If the thickness of the thin film portion 6322 is less than about 0.1 mm, the thin film portion 6322 may be more easily damaged by external impact. If the thickness of the thin film portion 6322 is greater than about 0.5 mm, it may take a relatively very long time for the thin film portion 6322 to melt, which may deteriorate efficiency of fire extinguishing.

In one or more embodiments, the diameter of the spray hole 621 may correspond to an angle θ of about 30° to about 90° about the center of the diameter of the fire-extinguishing conduit 620. The diameter of the recessed portion 6321 may also correspond to an angle θ of about 30° to about 90° about the center of the diameter of the fire-extinguishing conduit 620. If the diameter range of the spray hole 621 is less than about 30°, the heat transfer efficiency by the vent gas may be reduced, and the thin film portion 6322 may not be melted at a desired time. If the diameter range of the spray hole 621 is greater than about 90°, the durability of the thin film portion 6322 may be reduced, and the thin film portion 6322 may be damaged by external impact.

In one or more embodiments, the height of the inner wall 6323 of the recessed portion 6321 may be about 0.5 mm to about 3 mm. The recessed portion 6321 may be stably coupled to the spray hole 621 in the fire-extinguishing conduit 620, and the durability thereof may be ensured.

In one or more embodiments, the thin film portion 6322 may be melted at a temperature ranging from about 150 °C to about 500 °C. In one or more embodiments, the heat-sensitive member 630 may be melted at a temperature ranging from about 150 °C to about 500 °C. Because the thickness of the thin film portion 6322 is less than the thickness of the body portion 631, the thin film portion 6322 may be opened relatively quickly. In one or more embodiments, the recessed portion 6321 and the thin film portion 6322 may be provided corresponding to the vent portion 134 of the battery cell 100, so that the thin film portion 6322 may be immediately melted by the vent gas discharged from the vent portion 134.

In this way, according to the present disclosure, the nozzle portion 632 of the direct-spray fire-extinguishing conduit 620 for extinguishing a fire in the battery pack 300, the battery module 200, or the energy storage system may be stably opened even at a relatively low temperature. For example, a typical nozzle portion opening mechanism is as follows: presence of a flame results in an increase in temperature of the heat-sensitive member 630 and the fire-extinguishing conduit 620, which results in melting of the heat-sensitive member 630. A portion of heat suitable to melt the heat-sensitive member 630 may be transferred to the fire-extinguishing conduit 620, and a larger amount of heat may suitably open the nozzle portion 632.

If the amount of heat transferred to the fire-extinguishing conduit 620 is reduced or minimized, the heat-sensitive member 630 may be melted quickly or at a low temperature. According to the present disclosure, the amount of heat transferred to the fire-extinguishing conduit 620 may be reduced or minimized with a suitable structure, thereby allowing the nozzle portion 632 to be opened even at a relatively low temperature.

In FIG. 9B, three thick arrows represent the heat transfer path created by the vent gas traveling to the thin film portion, and two dotted arrows on both sides represent the heat transfer path created by the vent gas traveling to the fire-extinguishing conduit. As shown in FIG. 9B, the amount of heat transferred to the thin film portion may be greater than the amount of heat transferred to the fire-extinguishing conduit.

For example, the temperature of heat generated during thermal runaway of an end-of-life cell may be about 420 °C, which is lower than the temperature of flame emitted from a beginning-of-life cell (e.g., cell having a state of charge of 100%). It was experimentally confirmed that the nozzle portion 632 was normally opened due to the above-described structure at a relatively low temperature, with a result that a fire-extinguishing agent was sprayed at a desired time, and that fire was extinguished without thermal runaway.

FIG. 10 is a block diagram showing the electrical configuration of the direct-spray battery pack fire-extinguishing system 600 according to the present disclosure. As shown in FIG. 10, the direct-spray battery pack fire-extinguishing system 600 may further include a temperature sensor 641, a smoke sensor 642, a controller 643, and a valve 612.

The temperature sensor 641 may detect the temperature of the battery cell 100, and may transmit temperature information to the controller 643. In one or more embodiments, one temperature sensor 641 may be mounted in each of the battery modules 200, or may be mounted in each of the battery cells 100. In one or more embodiments, the temperature sensor 641 may be mounted adjacent to the vent portion 134.

The smoke sensor 642 may detect the amount of smoke discharged from the battery cell 100, and may transmit smoke information to the controller 643. In one or more embodiments, one smoke sensor 642 may be mounted in each of the battery modules 200, or may be mounted in each of the battery cells 100. In one or more embodiments, the smoke sensor 642 may be mounted adjacent to the vent portion 134.

The controller 643 may receive temperature information and/or smoke information about the battery cell 100 from the temperature sensor 641 and/or the smoke sensor 642, and may perform various control operations based on the temperature information and/or the smoke information.

The valve 612 may be mounted to the fire-extinguishing agent spray container 611 as described above, and may be opened or closed in response to a control signal from the controller 643. In one or more embodiments, the valve 612 may include an electronic valve 612 configured to be opened or closed in response to an electronic signal.

In one or more embodiments, upon determining that the temperature of the battery cell 100 exceeds a reference value and/or the amount of smoke from the battery cell 100 exceeds a reference value, the controller 643 may transmit to the valve 612 a control signal for opening the valve 612. A fire-extinguishing agent may be completely sprayed from the fire-extinguishing agent spray container 611 to the battery cell 100 through the fire-extinguishing conduit 620 and the heat-sensitive member 630.

In one or more embodiments, the valve 612 may further include a temperature-sensitive valve. In one or more embodiments, the valve 612 may be opened without a control signal from the controller 643 if an ambient temperature is higher than a reference value. High pressure may be applied to the fire-extinguishing conduit 620, and if this pressure exceeds a reference value, the nozzle portion 632 of the heat-sensitive member 630 may rupture, and the spray hole 621 may be opened. As such, even if a vent gas is not discharged from the battery cell 100, if the temperature of the battery module 200 (e.g., the ambient temperature of the valve 612) exceeds a reference value, a fire-extinguishing agent may be automatically supplied to the battery module 200.

As is apparent from the above description, the present disclosure may provide a battery pack fire-extinguishing system configured to, even upon occurrence of a low-temperature event in a battery cell in a battery pack, spray a fire-extinguishing agent to the corresponding battery cell, thereby lowering the temperature of the corresponding battery cell and the temperature of a nearby battery cell, and reducing or preventing propagation of heat to another battery cell adjacent to the corresponding battery cell.

Embodiments are set out in the following clauses:
Clause 1.A fire extinguishing system disposed near a plurality of battery cells, the fire extinguishing system comprising:
   a fire extinguishing conduit comprising a spray hole formed therein to spray a fire extinguishing agent to a vent hole formed in each of the plurality of battery cells; and
   a heat-sensitive member coupled to the fire extinguishing conduit while blocking the spray hole,
   wherein the heat-sensitive member comprises:
      a body portion surrounding a periphery of the fire extinguishing conduit; and
      a nozzle portion formed in a region corresponding to the spray hole, the nozzle portion having a thickness smaller than a thickness of the body portion.
Clause 2. The fire extinguishing system according to clause 1, wherein the nozzle portion comprises:
   a recessed portion formed in the body portion so as to be concave toward the spray hole; and
   a thin film portion formed on a bottom of the recessed portion, the thin film portion having a thickness smaller than the thickness of the body portion.
Clause 3. The fire extinguishing system according to clause 2, wherein the nozzle portion further comprises an expanded recessed portion formed outside the recessed portion, and
   wherein the expanded recessed portion has a diameter larger than a diameter of the recessed portion, has a thickness smaller than the thickness of the body portion, and has a thickness larger than the thickness of the thin film portion.
Clause 4. The fire extinguishing system according to clause 2, wherein a diameter of the recessed portion is smaller than a diameter of the spray hole.
Clause 5. The fire extinguishing system according to clause 2, wherein a diameter of the spray hole is 6% to 30% of a cross-sectional arc length of the fire extinguishing conduit.
Clause 6. The fire extinguishing system according to clause 2, wherein the recessed portion comprises an inner wall, and a thickness of the inner wall is larger than the thickness of the thin film portion.
Clause 7. The fire extinguishing system according to clause 2, wherein the recessed portion comprises an inner wall, and a thickness of the inner wall is 1.5 times to 3 times the thickness of the thin film portion.
Clause 8. The fire extinguishing system according to clause 2, wherein the recessed portion comprises an inner wall, and a thickness of the inner wall is 0.15 mm to 1.5 mm.
Clause 9. The fire extinguishing system according to clause 2, wherein the thickness of the thin film portion is 0.1 mm to 0.5 mm.
Clause 10. The fire extinguishing system according to clause 2, wherein a diameter of the spray hole is set so as to correspond to an angle of 30° to 90° about a center of a diameter of the fire extinguishing conduit.
Clause 11. The fire extinguishing system according to clause 2, wherein the recessed portion comprises an inner wall, and a height of the inner wall is 0.5 mm to 3 mm.
Clause 12. The fire extinguishing system according to clause 2, wherein the thin film portion is melted at a temperature ranging from 150 °C to 500 °C.
Clause 13. The fire extinguishing system according to clause 2, wherein the thin film portion is melted by a vent gas discharged from the vent hole in each of the plurality of battery cells.
Clause 14. The fire extinguishing system according to clause 1, further comprising:
   a temperature sensor configured to detect a temperature of each of the plurality of battery cells;
   a smoke sensor configured to detect an amount of smoke from each of the plurality of battery cells;
   a controller configured to receive temperature information about each of the plurality of battery cells from the temperature sensor or smoke information about each of the plurality of battery cells from the smoke sensor; and
   a valve mounted between the fire extinguishing conduit and a fire extinguishing agent spray container, the valve being configured to be opened or closed in response to a control signal from the controller,
   wherein the controller is configured to open the valve upon determining that the detected temperature or the detected amount of smoke exceeds a reference value.
Clause 15. The fire extinguishing system according to clause 1, wherein the fire extinguishing conduit comprises aluminum, copper, or stainless steel, and
   wherein the heat-sensitive member comprises acrylonitrile butadiene styrene (ABS), polypropylene (PP), polycarbonate (PC), polyethylene (PE), or perfluoro alkoxy alkene (PFA).

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A fire-extinguishing system for battery cells, the fire-extinguishing system comprising:
a fire-extinguishing conduit defining a spray hole for spraying a fire-extinguishing agent to a vent hole in one of the battery cells; and
a heat-sensitive member blocking the spray hole, and comprising:
a body portion at least partially surrounding a periphery of the fire-extinguishing conduit; and
a nozzle portion corresponding to the spray hole, and having a thickness that is less than a thickness of the body portion.

2. The fire-extinguishing system as claimed in claim 1, wherein the nozzle portion comprises:
a recessed portion in the body portion and concave toward the spray hole; and
a thin film portion on a bottom of the recessed portion, and having a thickness that is less than the thickness of the body portion.

3. The fire-extinguishing system as claimed in claim 2, wherein the nozzle portion further comprises an expanded recessed portion outside the recessed portion, having a diameter that is larger than a diameter of the recessed portion, having a thickness that is less than the thickness of the body portion, and having a thickness that is greater than the thickness of the thin film portion.

4. The fire-extinguishing system as claimed in claim 2 or claim 3, wherein a diameter of the recessed portion is smaller than a diameter of the spray hole.

5. The fire-extinguishing system as claimed in any one of claims 2 to 4, wherein the recessed portion comprises an inner wall having a thickness that is greater than the thickness of the thin film portion.

6. The fire-extinguishing system as claimed in any one of claims 2 to 5, wherein the recessed portion comprises an inner wall having a thickness of about 1.5 times to about 3 times the thickness of the thin film portion.

7. The fire-extinguishing system as claimed in any one of claims 2 to 6, wherein the recessed portion comprises an inner wall having a thickness of about 0.15 mm to about 1.5 mm.

8. The fire-extinguishing system as claimed in any one of claims 2 to 7, wherein the thickness of the thin film portion is about 0.1 mm to about 0.5 mm.

9. The fire-extinguishing system as claimed in any one of claims 2 to 8, wherein the recessed portion comprises an inner wall having a height of about 0.5 mm to about 3 mm.

10. The fire-extinguishing system as claimed in any one of claims 2 to 9, wherein the thin film portion is configured to be melted at a temperature of about 150 °C to about 500 °C.

11. The fire-extinguishing system as claimed in any one of claims 2 to 10, wherein the thin film portion is configured to be melted by a vent gas discharged from the vent hole in the one of the battery cells.

12. The fire-extinguishing system as claimed in any one of the preceding claims, wherein a diameter of the spray hole is about 6% to about 30% of a cross-sectional arc length of the fire-extinguishing conduit.

13. The fire-extinguishing system as claimed in any one of the preceding claims, wherein a diameter of the spray hole corresponds to an angle about a center of the fire-extinguishing conduit of about 30° to about 90°.

14. The fire-extinguishing system as claimed in any one of the preceding claims, further comprising:
a temperature sensor configured to detect a temperature of the one of the battery cells;
a smoke sensor configured to detect an amount of smoke from the one of the battery cells;
a controller configured to receive temperature information about the one of the battery cells from the temperature sensor, or smoke information about the one of the battery cells from the smoke sensor; and
a valve between the fire-extinguishing conduit and a fire-extinguishing agent spray container, and configured to be opened or closed in response to a control signal from the controller, the controller being configured to open the valve upon determining that the temperature exceeds a reference value or that the amount of smoke exceeds a reference value.

15. The fire-extinguishing system as claimed in any one of the preceding claims, wherein the fire-extinguishing conduit comprises aluminum, copper, or stainless steel, and
wherein the heat-sensitive member comprises acrylonitrile butadiene styrene (ABS), polypropylene (PP), polycarbonate (PC), polyethylene (PE), or perfluoro alkoxy alkene (PFA).
